# EUROPÄISCHE PATENTSCHRIFT

(11) **EP 2 464 879 B1**
(45) Veröffentlichungstag und Bekanntmachung des Hinweises auf die Patenterteilung: **10.09.2014**
(21) Anmeldenummer: 10735002.7
(22) Anmeldetag: 21.07.2010
(51) Int. Cl.: F16C 19/18, F16C 19/55

(54) **WÄLZLAGER**
ROLLING BEARING
PALIER À ROULEMENT

(30) Priorität: 14.08.2009 DE 102009037571
(43) Veröffentlichungstag der Anmeldung: 20.06.2012
(73) Patentinhaber: Schaeffler Technologies GmbH & Co. KG, 91074 Herzogenaurach (DE)
(72) Erfinder: RADINGER, Norbert, 90475 Nürnberg (DE); SMETANA, Tomas, 91074 Herzogenaurach (DE)
(86) Internationale Anmeldenummer: PCT/EP2010/060525
(87) Internationale Veröffentlichungsnummer: WO 2011/018314

(56) Entgegenhaltungen:
- DE-A1- 10 314 259

## Beschreibung

Die Erfindung betrifft ein Wälzlager, das wenigstens eine erste Reihe und eine zweite Reihe jeweils Wälzkörper und einen gemeinsamen Lagerring für beide Reihen aufweist, wobei
- der Lagerring eine radial äußere Laufbahn für die Wälzkörper der ersten Reihe und eine radial innere Laufbahn für die Wälzkörper der zweiten Reihe aufweist,
- die Wälzkörper in jeder der Reihen jeweils im berührenden Kontakt zu einer inneren Laufbahn und einer äußeren Laufbahn stehen,
- die Konturen der Laufbahnen in gedachten Schnittebenen, die axial entlang der Rotationsachse verlaufen und am Kontakt durch die Laufbahn und durch den jeweiligen Wälzkörper gelegt sind, jeweils durch mindestens einen in der jeweiligen Schnittebene ausgerichteten Laufbahnradius vorgegeben sind,
- die Konturen der Wälzkörper zumindest in den Schnittebenen jeweils zu einem Rotationszentrum der Wälzkörper rotationssymmetrisch verlaufen und jeweils durch mindestens einen von dem Rotationszentrum ausgehenden Wälzkörperradius beschrieben sind,
- die Konturen der Wälzkörper und der Laufbahnen in den jeweiligen Schnittebenen von dem Rotationszentrum aus betrachtet in die gleichen Richtungen konvex ausgewölbt sind,
und wobei die Wälzkörper der ersten Reihe den gleichen Wälzkörperradius aufweisen, wie die Wälzkörper der zweiten Reihe.

### Hintergrund der Erfindung

US 3,737,202 zeigt drei Ausführungen der gattungsgemäßen Wälzlager. Die tragenden Kugeln innerhalb der jeweiligen Reihe sowie untereinander zwischen den Reihen sind gleich groß, weisen also den selben Wälzkörperradius auf. Die erste Ausführung zeigt Wälzlager des Typs zweireihiges Schrägkugellager. Die zweite und dritte Ausführung zeigen Mischformen der Typen Schrägkugellager und Radialrillenkugellager.

Die erste Ausführung der gattungsgemäßen Kugellager sieht zwei Reihen Kugeln mit einem inneren Lagerring für die erste Reihe Kugeln, einen gemeinsamen Lagerring für die erste Reihe und die zweite Reihe sowie mindestens einen äußeren Lagerring für die zweite Reihe vor. Der gemeinsame Lagerring weist eine äußere Laufbahn für die Kugeln der radial innen umlaufenden ersten Reihe und eine innere Laufbahn für die Kugeln der radial außen umlaufenden zweiten Reihe auf.

In US 3,737,202 sind zwei Gruppen der zuvor genannten Ausführungen beschrieben. In der ersten Gruppe weisen die Teilkreise der ersten Reihe und zweiten Reihe gleiche Teilkreisdurchmesser auf. Da die Reihen gleiche Teilkreise haben und da die Kugeln alle den gleichen Durchmesser aufweisen, sind die Durchmesser der inneren Berührkreise der Reihen zueinander und die Durchmesser der äußeren Berührkreise der Reihen zueinander gleich.

In der zweiten Gruppe der vorgenannten Ausführungen zweireihiger Kugellager weist die erste Reihe Kugeln einen Teilkreis auf, dessen Teilkreisdurchmesser kleiner ist als der Teilkreisdurchmesser des Teilkreises der zweiten Reihe. Da die Kugeln alle den gleichen Durchmesser aber unterschiedliche Teilkreise aufweisen, unterscheiden sich auch die Durchmesser der inneren Berührkreise der Reihen zueinander und die äußeren Berührkreise der Reihen zueinander.

Berührkreise sind die Kreise um die Rotationsachse des Wälzlagers, auf denen die Kontakte der Kugeln mit den Laufbahnen liegen.

Die zweite Ausführung der gattungsgemäßen Kugellager nach US 3,737,202 weist drei Reihen Kugeln, einen gemeinsamen Lagerring für die Reihen sowie innere Lagerringe und äußere Lagerringe auf. Diese dreireihigen Kugellager lassen sich in nachfolgend beschriebene Gruppen aufteilen.

Die dreireihigen Kugellager der ersten Gruppe weisen eine erste Reihe und zwei zweite Reihen Kugeln auf und sind mit einem gemeinsamen Lagerring für die erste und die zweiten Reihen versehen. Die Kugeln der ersten Reihe sind an einem Teilkreis angeordnet, der kleiner ist als der Teilkreis, an dem die Kugeln der beiden zweiten Reihen angeordnet sind. Die Teilkreise der beiden zweiten Reihen sind zueinander gleich groß. Die Kugeln der ersten Reihe laufen an einer äußere Laubahnen des gemeinsamen Lagerrings und an einer inneren Laufbahn eines Innenrings ab. Der gemeinsame Lagerring weist außerdem zwei innere Laufbahnen für die beiden zweiten Reihen auf. Das Kugellager ist außerdem mit zwei separaten äußeren Lagerringen versehen, von denen jeder mit jeweils einer äußeren Laufbahn für jeweils eine der beiden zweiten Reihen versehen ist.

Die dreireihigen Kugellager der zweiten Gruppe nach US 3,737,202 weisen zwei erste Reihen Kugeln, deren Teilkreise zueinander gleich sind, und eine zweite Reihe Kugeln auf und sind mit einem gemeinsamen Lagerring für die Reihen versehen. Die Teilkreisdurchmesser der Teilkreise der ersten Reihen sind kleiner als der Durchmesser des Teilkreises der einen zweiten Reihe. Jeder der ersten Reihen ist eine äußere Laufbahn an dem gemeinsamen Lagerring zugeordnet. Die inneren Laufbahnen für die zwei ersten Reihen sind jeweils an einem inneren Lagerring pro Reihe angeordnet. Der gemeinsame Lagerring weist außerdem eine innere Laufbahn für die Kugeln der zweiten Reihe auf. Den Kugeln der zweiten Reihe ist außerdem noch eine äußere Laufbahn an einem äußeren Lagerring zugeordnet.

Die dritte Ausführung beschreibt ein Kugellager mit zwei ersten Reihen und mit einer zweiten Reihe. Die Kugeln der drei Reihen sind auf axial zueinander benachbarten Teilkreisen mit gleichem Durchmesser angeordnet und weisen einen gemeinsamen Lagerring auf. Der gemeinsame Lagerring weist zwei äußere Laufbahnen für die ersten Reihen und eine innere Laufbahn für die zweite Reihe auf. Außerdem ist jeder ersten Reihe ein innerer Lagerring und der zweiten Reihe ein äußerer Lagerring zugeordnet.

Als Vorteile derartiger Anordnungen wird in US 3, 737, 202 beschrieben, dass die Gesamtdrehzahl des Lagers an jeder der Reihen ungefähr auf die Hälfte der Gesamtdrehzahl reduziert wird und damit die Lebensdauer des Wälzlagers erhöht wird. Für den Fall, dass sich im Wälzkontakt einer der Reihen aufgrund von Verschleiß oder Wärme die Reibung erhöht, wird dessen Drehzahl auf ein erträgliches Maß verringert und der Drehzahlunterschied durch die andere Reihe ausgeglichen. Für den Fall, dass eine Reihe ausfällt, weist das Lager insofern Notlaufeigenschaften aus, dass das andere Lager zwar mit der Gesamtdrehzahl weiter dreht, das Wälzlager an sich aber nicht gleich blockiert.

DE 103 14 259 A1 zeigt ein Beispiel eines zweireihigen Schrägkugellagers der Gattung, in dem die beiden Reihen einen gemeinsamen Lagerring und unterschiedliche Teilkreise aufweisen. Aus DE 103 14 259 A1 ist bekannt, dass die Gesamtdrehzahl der Kugeln der Reihen durch Einsatz eines gemeinsamen Lagerrings im wesentlichen halbiert und damit der Durchmesser-DrehzahlKennwert auch im wesentlichen halbiert werden kann.

Dieser Kennwert wird im Katalog HR1 der Schaeffler KG vom Januar 2006 in der Beschreibung der technischen Grundlagen im Kapitel "Schmierung" auch als Drehzahlkennwert bezeichnet und ist das Produkt aus Drehzahl und Teilkreisdurchmesser und ist außerdem abhängig vom Lagertyp. Dieser Kennwert ist ein Wert, der für die Auswahl des Schmierfettes in Abhängigkeit von Belastung und Drehzahl hinzugezogen wird. Die Grenzwerte für diesen Kennwert liegen je nach Lagertyp zwischen 350 000 und 600 000. Der Wert ist einerseits wichtig für die Lebensdauer des Schmierfettes und damit für die Lebensdauer Wälzlagers.

Die Reibung innerhalb eines Wälzlagers ist unter anderem auch abhängig von der Belastung, den Temperaturen, der Drehzahl und von der Viskosität des Schmierfettes. Im Fachbuch "Wälzlagerpraxis" Brändlein, Eschmann et al, Herausgegeben von Vereinigte Fachbuchverlage GmbH Ausgabe 1995, ist dazu im Kapitel "Reibung, Temperatur und Schmierung" auf Seite 210 ausgeführt: "Der Widerstand, den ein Wälzlager seiner Drehung entgegensetzt, setzt sich aus der Rollreibung, der Gleitreibung und der Schmierstoffreibung zusammen." Weiter heißt es: "Bedeutung erhält die Reibung dadurch, dass sie die im Lager entstehende Wärme bestimmt und so die Temperatur der Lagerteile und des Schmierstoffs beeinflusst." Auf Seite 213 heißt es dazu im gleichen Kapitel weiter: " Die Schmierstoffreibung in einem Wälzlager setzt sich aus der inneren Reibung des Schmierstoffs an den Kontaktstellen und der bei Schmierstoffüberschuss und höheren Drehzahlen auftretenden Plansch- und Walkarbeit zusammen. Die gesamte Schmierstoffreibung hängt in erster Linie von der Menge und Zähigkeit des Schmierstoffs ab....Bei kleineren Drehzahlen ist sie im allgemeinen gering. Sie erhöht sich jedoch in Abhängigkeit von der Ölviskosität bzw. der Fettkonsistenz mit wachsender Drehzahl deutlich."

Als Faustregel für fettgeschmierte Wälzlager gilt deshalb in Lagern mit höheren Betriebsdrehzahlen Schmierfette mit geringerer Konsistenz einzusetzen. Diese Schmierfette sind in der Regel außerdem aufgrund der an sie gestellten Anforderungen wesentlich teuerer als Schmierfette, die in Lagern mit geringeren Drehzahlen eingesetzt werden können. Außerdem ist es bei zunehmenden Drehzahlen und damit zunehmendem Einfluss von Fliehkraft und/oder bei höheren Temperaturen aufgrund der relativ geringen Konsistenz schwieriger, das Schmierfett im Wälzkontakt und im Wälzlager zu halten. An derartigen Lagern werden deshalb oft besonders gestaltete des Käfige und aufwendige Dichtungen realisiert, die das Wälzlager auch teuerer machen.

"Bei allen Wälzlagern mit gekrümmten Laufbahn- und Rollkörperprofil ist der Radius des Laufbahnprofils um ein geringes Maß größer als der entsprechende Radius des Rollkörpers. Dieser Krümmungsunterschied in der Axialebene wird durch die Schmiegung gekennzeichnet. Unter Schmiegung versteht man das auf den Rollkörperradius bezogene Rillenübermaß." ["Wälzlagerpraxis" Brändlein, Eschmann et al, Vereinigte Fachbuchverlage GmbH, Ausgabe 1995]. Die Erfindung betrifft also Wälzlager, in denen der Radius der Laufbahnen am Wälzkontakt größer ist als der Radius der Wälzkörper an diesen Stellen.

### Beschreibung der Erfindung

Die Aufgabe der Erfindung ist es ein Wälzlager mit reduzierter Reibung und verbesserte Lebensdauer zu schaffen, das sich kostengünstig herstellen lässt.

Diese Aufgabe ist mit dem Gegenstand des Anspruchs 1 gelöst.

Der Laufbahnradius entweder der inneren Laufbahn oder der äußeren Laufbahn der ersten Reihe ist anders als der Laufbahnradius der inneren Laufbahn an dem gemeinsamen Lagerring. Der gemeinsame Lagerring ist auch als Zwischenring bezeichnet. Die innere Laufbahn liegt radial außen an dem Zwischenring. Demnach ist die innere Laufbahn die der zweiten Reihe. Anders ausgedrückt ist die Schmiegung der Wälzkörper der ersten Reihe mit der Krümmung der inneren bzw. der äußeren Laufbahn anders als die Schmiegung der Wälzkörper der zweiten Reihe mit der Krümmung ihrer inneren Laufbahn. Wie schon im Kapitel "Hintergrund der Erfindung" beschrieben ist, bestimmt die Reibung die im Lager entstehende Wärme und beeinflusst so die Temperatur der Lagerteile und des Schmierstoffs. Die Reibung im Lager ist abhängig von der Drehzahl. Je höher die Drehzahl ist, desto höher wird die Reibung. Die Reibung führt zu Widerständen gegen die Drehung des Lagers, die auch als Reibmomente bezeichnet sind. Bei Wälzlagern der Gattung des Standes der Technik werden also in Reihen mit unterschiedlichen Teilkreisen unterschiedliche Relativdrehzahlen und damit unterschiedlichen Reibmomente erzeugt. Unterschiede der Reibmomenten führen zur ungleichmäßigen Beanspruchungen wie zu Temperaturdifferenzen in den Lagern. Die Fettlebensdauer muss damit nach den Werten der Reihe mit dem größeren Teilkreisdurchmesser bemessen werden.

Der Vorteil der Erfindung liegt darin, dass diese ungleichmäßigen Belastungen gezielt durch unterschiedliche Schmiegungen am Wälzkontakt der einen Reihe zur anderen Reihe verstärkt, vermindert oder ausgeglichen werden können. Größere Schmiegungen verringern die Reibung im Lager. Kleinere Schmiegungen erhöhen diese. So ist durch Wahl geeigneter Schmiegungsverhältnisse eine gezielte Regelung der Drehzahl des Zwischenrings genau auf die Hälfte und nicht wie beim gattungsbildenden Stand der Technik nur ungefähr auf die Hälfte der Gesamtdrehzahl möglich.

So ist es denkbar, in dem Wälzlager an der Reihe mit dem größeren Teilkreis den Wert der Schmiegung im Vergleich zu den Schmiegungen an der Reihe mit dem kleineren Teilkreis zu vergrößern. Damit kann der durch höhere Relativdrehzahlen hervorgerufene höhere Anteil an Reibung in der Reihe mit dem größeren Teilkreis wieder kompensiert werden, so dass in beiden Reihen in etwa die gleichen Reibverhältnisse herrschen. Der Drehzahlkennwert kann somit genau an der über Schmiegungen gezielt einstellbaren Drehzahl des Zwischenrings berechnet werden. Die Auswahl eines kostengünstigeren Schmierfettes ist genauso denkbar wie die Verlängerung der Lebensdauer des bisher eingesetzten Fettes.

Weiterhin ist es denkbar, dass Reihen, die stärker thermisch belastet sind an einer oder beiden Laufbahnen mit größerer Schmiegung zu den Wälzkörpern versehen ist, als die Laufbahnen der Reihen mit geringeren thermischen Belastungen. So kann ein durch die höhere thermische Belastung im Wälzkontakt hervorgerufener höherer Anteil an Reibung mit einer vergrößerten Schmiegung an der betroffenen Laufbahn kompensiert werden.

Außerdem kann die Schmiegung an Laufbahnen von Reihen, die im Betrieb anderen Verformungen ausgesetzt sind als andere Laufbahnen, größer oder kleiner sein als die an Laufbahnen mit anderen Verformungen. Dabei kann der durch unterschiedliche Verformung hervorgerufene Anteil höherer Reibung gezielt durch die Wahl einer anderen Schmiegung an der betroffenen Laufbahn kompensiert werden.

Eine Ausgestaltung der Erfindung sieht vor, dass der Laufbahnradius der inneren Laufbahn der ersten Reihe am inneren Lagerring kleiner ist als der Laufbahnradius der inneren Laufbahn der zweiten Reihe an dem gemeinsamen Lagerring. Damit ist die Schmiegung der Wälzkörper der ersten Reihe mit der Krümmung der äußeren Laufbahn geringer als die Schmiegung der Wälzkörper der zweiten Reihe mit der Krümmung der inneren Laufbahn am Zwischenring.

Weiter ist vorgesehen, dass der Laufbahnradius der äußeren Laufbahn für die Wälzkörper der ersten Reihe an dem gemeinsamen Lagerring kleiner ist als der Laufbahnradius der inneren Laufbahn für die zweiten Wälzkörper an dem gemeinsamen Lagerring. Damit ist die Schmiegung zwischen den Wälzkörpern der ersten Reihe und der Krümmung der äußeren Laufbahn am Zwischenring geringer als die Schmiegung zwischen der Krümmung der inneren Laufbahn an dem Zwischenring und den Wälzkörpern der zweiten Reihe.

Eine weitere Ausgestaltung der Erfindung sieht vor, dass der Laufbahnradius der inneren Laufbahn an dem gemeinsamen Lagerring kleiner ist als der Laufbahnradius der äußeren Laufbahn der zweiten Reihe. Damit ist die Schmiegung zwischen den Wälzkörpern der zweiten Reihe und der Krümmung der inneren Laufbahn am gemeinsamen Lagerring kleiner als die Schmiegung zwischen den Wälzkörpern der zweiten Reihe und der Krümmung der äußeren Laufbahn.

Eine weitere Ausgestaltung der Erfindung sieht vor, dass der Laufbahnradius der inneren Laufbahn der ersten Reihe kleiner ist als der Laufbahnradius der äußeren Laufbahn für die erste Reihe an dem gemeinsamen Lagerring. Weiter ist in diesem Zusammenhang vorgesehen, dass der Laufbahnradius der äußeren Laufbahn für die erste Reihe an dem gemeinsamen Lagerring kleiner ist als der Laufbahnradius der inneren Laufbahn für die zweite Reihe an dem gemeinsamen Lagerring und dass der Laufbahnradius der inneren Laufbahn für die zweite Reihe an dem gemeinsamen Lagerring kleiner ist als der Laufbahnradius der äußeren Laufbahn für die zweite Reihe. Mit anderen Worten, die Schmiegungen der Wälzkörper jeder Reihe mit ihren äußeren Laufbahnen sind größer als die Schmiegungen der Wälzkörper der gleichen Reihe mit den Krümmungen der jeweiligen inneren Laufbahn. Gleichzeitig sind die Schmiegungen zwischen den Wälzkörpern der ersten Reihe und den Krümmungen ihrer Laufbahnen kleiner als die Schmiegungen zwischen den Wälzkörpern der zweiten Reihe und den Krümmungen ihrer Laufbahnen.

Bevorzugt sind die Schmiegungsverhältnisse insbesondere bei zweireihigen Schrägkugellagern mit einem gemeinsamen Lagerring als Zwischenring Die Erfindung betrifft auch alle Ausführungsvarianten und Gruppen von Wälzlagern, die im Kapitel "Hintergrund der Erfindung" beschrieben sind.

Die ersten Reihen unterscheiden sich von den zweiten Reihen durch den Durchmesser ihrer Teilkreise und/oder durch den Typ der Lageranordnung. Dabei ist es unerheblich wie viele erste Reihen und zweite Reihen das Wälzlager aufweist. Jedoch weisen alle erste Reihen eines Lagers den gleichen Teilkreis auf und/oder sind vom gleichen Lagertyp. Dementsprechend weisen auch alle zweiten Reihen eines Wälzlagers untereinander die gleichen Teilkreise auf und/oder sind vom gleichen Lagertyp. Denkbar ist auch, dass das erfindungsgemäße Wälzlager dritte, vierte und n-te Reihen an Wälzkörpern aufweist, die sich von den Reihen mit den anderen Ordnungszahlen durch andere Teilkreise und/oder Lagertypen unterscheiden. So ist es denkbar, dass in einer Lageranordnung Radialrillenkugellager mit Schrägkugellagern und oder Vierpunktlagern kombiniert sind. Die Erfindung gilt für Wälzlager in denen alle tragenden Wälzkörper der Reihen zueinander den gleichen Durchmesser aufweisen.

Unter einem gemeinsamen Lagerring ist ein einteiliges oder aus beliebig vielen Stücken zusammengesetztes Bauelement zu verstehen, an dem sich mindestens zwei vom Teilkreis oder Typ her unterscheidende Reihen Wälzkörper abwälzen, der als Zwischenring zwischen diesen Reihen angeordnet ist, und der deshalb mit der halben Drehzahl der Gesamtdrehzahl des Lagers rotiert.

Innere Laufbahnen sind die Laufbahnen einer Reihe, die der Rotationsachse näher sind als die äußere Laufbahn in der gleichen Reihe. Die Konturen der inneren Laufbahnen sind um die Rotationsachse durch Außenumfänge und die Konturen der äußeren Laufbahnen durch Innenumfänge beschrieben. Diese Definitionen der Laufbahnen lassen auch zu, dass die innere(n) Laufbahn(en) einer Reihe insgesamt oder ein Teil durch Außenumfänge beschrieben sind, die größer sind als die Innenumfänge, durch die die äußeren Laufbahn einer oder mehrerer anderer Reihen beschrieben sind. Die Laufbahnen sind an Bauelementen ausgebildet, die entweder die klassischen Wälzlagerringe sind oder direkt an Wellen, Bolzen, Gehäusen und hohlzylindrischen Bauteilen beliebiger Art.

Unter Schräglager sind die Lageranordnungen zu verstehen, bei denen die Drucklinien zwischen den Kontakten der Wälzkörper an der inneren Laufbahn und den äußeren Laufbahnen nicht wie bei Rillenkugellagern radial zur Lagermittenachse sondern schräg zu dieser verlaufen. Die Drucklinie erstreckt sich dabei in einer gedachten axial entlang der Rotationsachse des Wälzlagers verlaufenden und am Kontakt der Wälzkörper mit der jeweiligen Laufbahn durch die Wälzkörper und Laufbahnen gelegte Schnittebene, zwischen den Kontakten der Wälzkörper mit der inneren Laufbahn und der äußeren Laufbahn.

Die Wälzkörper der ersten Reihe berühren die innere Laufbahn am Kontakt an einem um die Rotationsachse umlaufenden inneren Berührkreis. Der Durchmesser des Berührkreises ist kleiner als es der Durchmesser eines um die Rotationsachse umlaufenden inneren Berührkreises am Kontakt der Wälzkörper der zweiten Reihe mit der inneren Laufbahn am Lagerring ist.

Die Berührkreise sind die gedachten und um die Rotationsachse des Wälzlagers umlaufenden Kreise an jeweils einer Laufbahn, die durch die Kontakte jeweils einer Reihe mit der Laufbahn gelegt sind. Dabei wird zwischen inneren Berührkreisen an der inneren Laufbahn und äußeren Berührkreisen an der äußeren Laufbahn unterschieden. Bei Rollenlagern und Kugellagern sind die Berührkreise im jeweiligen Kontakt der Nenndurchmesser der Rollen bzw. Kugeln definiert. Bei Radiallagern liegen die Berührkreise an der inneren Laufbahn in der gleichen Radialebene wie die Berührkreise an den äußeren Laufbahnen. Bei Schrägkugellagern liegen die Berührkreise in unterschiedlichen axial zueinander benachbarten Radialebenen.

Eine Ausgestaltung der Erfindung sieht vor, dass beide Reihen des Wälzlagers in Schrägkugellageranordnung angeordnet sind, so dass das Wälzlager ein zweireihiges Schrägkugellager mit einem gemeinsamen Zwischenring ist. Weiter ist dazu vorgesehen, dass die Drucklinien beider Schrägkugellager-Reihen mit ihrer gemeinsamen Rotationsachse den gleichen Druckwinkel zwischen sich einschließen.

Das Schrägkugellager ist zweireihig mit einer ersten Reihe Kugeln und einer zweiten Reihe Kugeln und dem gemeinsamen Lagerring zwischen den Reihen gebildet. Der gemeinsame Lagerring weist die äußere Laufbahn für die Kugeln der ersten Reihe und die innere Laufbahn für die Kugeln der zweiten Reihe auf. Die Schmiegung zwischen den Kugeln der ersten Reihe und der Krümmung einer der Laufbahnen der ersten Reihe sind kleiner als die Schmiegungen der Kugeln der zweiten Reihe mit den Krümmungen zumindest einer der Laufbahnen für die zweiten Reihe.

Das Schrägkugellager weist einen inneren Lagering für die erste Reihe, den gemeinsamen Lagerring zwischen der ersten Reihe und der zweiten Reihe und einen äußeren Lagerring für die zweite Reihe auf. Die Lagerringe sind radial konzentrisch zueinander und axial zumindest teilweise so ineinander geschachtelt, dass der gemeinsame Lagerring zumindest eine axialen Abschnitt des inneren Rings und der äußere Lagerring zumindest einen axialen Abschnitt des gemeinsamen Lagerrings umfangsseitig umgreift.

Die Schmiegung zwischen der Wälzkörpern der ersten Reihe und der Krümmung der inneren Laufbahn an dem Innenring ist vorzugsweise geringer, als die Schmiegung zwischen den Wälzkörpern der ersten Reihe und der Krümmung der äußeren Laufbahn an dem gemeinsamen Lagerring. Außerdem ist die Schmiegung zwischen den Wälzkörpern der ersten Reihe und der Krümmung der äußeren Laufbahn an dem gemeinsamen Lagerring geringer als die Schmiegung zwischen den Wälzkörpern der zweiten Reihe und der inneren Laufbahn an dem gemeinsamen Lagerring. Letztendlich ist die Schmiegung zwischen den Wälzkörpern der zweiten Reihe und der Krümmung der äußeren Laufbahn an dem Außenring die größte im Schrägkugellager, so dass die Werte der Schmiegung an den Kontakten im Wälzlager radial von innen nach außen betrachtet von Laufbahn zu Laufbahn größer werden.

Bevorzugte Schmiegungsverhältnisse ergeben sich aus folgenden Relationen:
- Der Wert der Schmiegung Sᵢ₁ an der inneren Laufbahn des inneren Lagerringes ist Sᵢ₁ =103 bis max. 107, d.h. der Radius der Krümmung der inneren Laufbahn ist 3% bis maximal 7% größer als der Radius der Wälzkörper.
- Der Wert der Schmiegung Sₐ₁ an der äußeren Laufbahn für die Wälzkörper der ersten Reihe an dem gemeinsamen Zwischenring ist immer um den Zahlenwert "Zwei" größer als die Schmiegung Sᵢ₁ so dass sich Sₐ₁ im Bereich von Sₐ₁=105 bis max. Sₐ₁=109, dass heißt die äußere Laufbahn mit 5% bis 9% größeren Radien gegenüber den Wälzkörperradius und mit jeweils 2% größeren Radius gegenüber dem Radius der inneren Laufbahn ergibt.

- Damit ergeben sich Schmiegungsverhältnisse in der ersten Reihe von Sᵢ₁/ Sₐ₁= 103/105 alternativ 104/106 alternativ 105/107 alternativ vorzugsweise 106/108 und alternativ 107/109.
- Der Wert der Schmiegung Sᵢ₂ an der inneren Laufbahn für die zweite Reihe an dem Zwischenring ist immer um den Zahlenwert "Zwei" größer als die Schmiegung Sₐ₁, so dass sich Sᵢ₂ im Bereich von Sᵢ₂=107 bis maximal Sᵢ₂=111, dass heißt mit 7% bis 11% größeren Radien gegenüber dem Wälzkörperradius und mit jeweils 2% größeren Radius gegenüber der äußeren Laufbahn an dem Zwischenring ergibt.
- Damit ergeben sich Schmiegungsverhältnisse zwischen der äußeren Laufbahn der ersten Reihe gegenüber der inneren Laufbahn der zweiten Reihe von Sₐ₁/ Sᵢ₂= 105/107 alternativ 106/108 alternativ 107/109 alternativ vorzugsweise 108/110 und alternativ 109/111.
- Der Wert der Schmiegung Sₐ₂ an der äußeren Laufbahn für die Wälzkörper der ersten Reihe an dem gemeinsamen Zwischenring ist immer um den Zahlenwert "Fünf" größer als die Schmiegung Sᵢ₂ so dass sich Sₐ₂ im Bereich von Sₐ₂=112 bis max. Sₐ₂=116, dass heißt die äußere Laufbahn mit 12% bis 16% größeren Radien gegenüber den Wälzkörperradius und mit jeweils 5% größeren Radius gegenüber dem Radius der inneren Laufbahn am Zwischenring ergibt.
- Damit ergeben sich Schmiegungsverhältnisse in der zweiten Reihe von Sᵢ₂/ Sₐ₂= 107/112 alternativ 108/113 alternativ 109/114 alternativ vorzugsweise 110/115 und alternativ 111/116.

Unter Teilkreis ist der gedachte Kreis um die Rotationsachse zu verstehen, der durch die Rotationszentren der in Umgangsrichtung zueinander benachbarten Wälzkörper verläuft. Die Rotationszentren liegen dabei auf den Rotationsachsen von Rollen oder sind Mittelpunkte von Kugeln.

Weitere Beispiele für Typen von Lagern, in denen die Erfindung angewendet wird, sind Wälzlager die Rollen mit kugel-balliger Oberfläche aufweisen, wie sogenannte Kugelrollenlager. Ein Kugelrollenlager weist als Wälzkörper sogenannte Kugelrollen auf, die auch Kugelscheiben genannt sind. Eine Kugelrolle ist eine Rolle, deren rotationssymmetrische Mantelflächen durch einen Kugelradius beschrieben sind, der vom Zentrum der Kugelrolle ausgeht. Die Kugelrollen weisen abweichend von der Kugelgrundform abgeflachte Flanken auf. Die kreisflächenförmigen Flanken sind konzentrisch zur Rotationsachse der Kugelrollen und zueinander so parallel angeordnet, dass diese senkrecht von der Rotationsachse durchstoßen werden. Der Vorteil der Anwendung solcher Wälzkörper liegt darin, dass diese bei vergleichbarer Abmessung zu Rillenkugellagern mit mehr Wälzkörpern befüllt werden können und dass diese trotzdem leichter als die klassischen Kugellager sein können.

Weitere Beispiele für Typen von Lagern, in denen die Erfindung angewendet wird, sind Rollenlager deren Rollen eine zur eigenen Rotationsachse rotationssymmetrische und konvex-ballige Oberfläche aufweisen. Die Kontur der Oberfläche ist in Axialschnitten entlang der Rotationsachse der Rollen durch einen oder mehrere Radien beschrieben, deren Einstichpunkte mit beliebigen Abstand zur Rotationsachse der Rolle liegen oder auf der Rotationsachse liegen, im letzteren Fall aber größer sind als der größte radiale Durchmesser der Rolle.

Die Erfindung betrifft die Gattung mehrreihiger Wälzlager, bei denen die Anzahl der Lagerringe größer, kleiner oder gleich zur Anzahl der Wälzkörperreihen ist.

Eine allgemein bekannte Maßnahme zur Verringerung der Umfangsgeschwindigkeit ist die Verringerung des Durchmessers des Teilkreises. Je kleiner der Teilkreis ist, um so niedriger sind die Umfangsgeschwindigkeiten und somit die Reibung und Eigenerwärmung des Lagers. Beliebig kann der Teilkreis jedoch nicht verringert werden, da die notwendigen Tragzahl nicht mehr erzielt werden kann. Derartigen Maßnahmen sind auch durch die Abmessungen der Umgebungskonstruktion Grenzen gesetzt. Dies trifft insbesondere für ineinander geschachtelte Anordnungen in Doppelkupplungsgetrieben und deren Kupplungen zu.

Ein weiterer unabhängiger Anspruch sieht deshalb für eine Getriebewellenanordnung eines Getriebes, insbesondere eines Doppelkupplungsgetriebes, eine Lageranordnung zur Lagerung wenigstens einer Getriebewelle vor. Die Lageranordnung weist wenigstens ein vorgespanntes zweireihiges Schrägkugellager mit zumindest einer ersten Reihe Kugeln, wenigstens einer zweiten Reihe Kugeln und einem gemeinsamen Lagerring zwischen den Reihen auf. Der gemeinsame Lagerring weist nach den zuvor beschriebenen Vorbildern eine äußere Laufbahn für die Kugeln der ersten Reihe und eine innere Laufbahn für die Kugeln der zweiten Reihe auf. Die Schmiegung zwischen den Kugeln der ersten Reihe und der Krümmung wenigstens einer der Laufbahnen der ersten Reihe kleiner sind gemäß dem zuvor beschriebenen Gegenstand und seinen Ausgestaltungen kleiner als die Schmiegungen der Kugeln der zweiten Reihe mit den Krümmungen der Laufbahnen für die zweiten Reihe.

Ein weiterer unabhängiger Anspruch sieht für eine Wälzlageranordnung in einer Kupplung eines Doppelkupplungsgetriebes wenigstens ein erfindungsgemäßes Schrägkugellager vor. Das Schrägkugellager kann ein Stützlager oder wenigstens ein Ausrücklager sein. Das Schrägkugellager ist zweireihig mit einer ersten Reihe Kugeln und einer zweiten Reihe Kugeln und einem gemeinsamen Lagerring zwischen den Reihen. Der gemeinsame Lagerring weist eine äußere Laufbahn für die Kugeln der ersten Reihe und eine innere Laufbahn für die Kugeln der zweiten Reihe auf. Die Schmiegungen zwischen den Kugeln der ersten Reihe und zumindest der Krümmung einer der Laufbahnen der ersten Reihe sind kleiner als die Schmiegungen der Kugeln der zweiten Reihe mit den Krümmungen zumindest einer der Laufbahnen für die zweiten Reihe.

Gemäß einer Ausgestaltung der Erfindung sind die Lagerringe radial konzentrisch zueinander und axial zumindest teilweise so ineinander geschachtelt, dass der gemeinsame Lagerring zumindest einen axialen Abschnitt des inneren Rings und der äußere Lagerring zumindest einen axialen Abschnitt des gemeinsamen Lagerrings umfangsseitig umgreift.

Gemäß einer Ausgestaltung der Erfindung sind mit Sicht auf zuvor aufgeführte Verhältnisse und Relationen und konkrete Zahlenwerte die Schmiegung zwischen der Wälzkörpern der ersten Reihe und der Krümmung der inneren Laufbahn an dem Innenring geringer, als die Schmiegung zwischen den Wälzkörpern der ersten Reihe und der Krümmung der äußeren Laufbahn an dem gemeinsamen Lagerring. Die Schmiegung zwischen den Wälzkörpern der ersten Reihe und der Krümmung der äußeren Laufbahn an dem gemeinsamen Lagerring ist geringer als die Schmiegung zwischen den Wälzkörpern der zweiten Reihe und der inneren Laufbahn an dem gemeinsamen Lagerring. Die Schmiegung zwischen den Wälzkörpern der zweiten Reihe und der Krümmung der äußeren Laufbahn an dem Außenring ist die größte im Schrägkugellager.

### Detaillierte Beschreibung der Zeichnung

Gleichbedeutende Funktionselemente sind trotz eventuell unterschiedlichen Aussehens in der folgenden Beschreibung durchgehend mit den gleichen Bezugszeichen versehen.

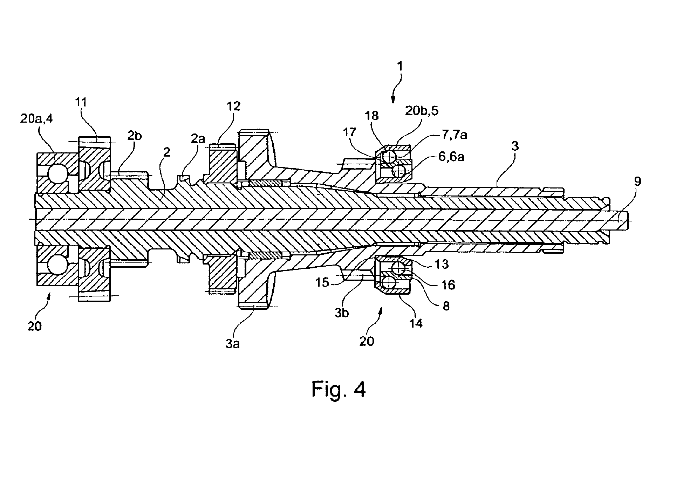

Figur 4 - Figur 4 zeigt eine Getriebewellenanordnung 1 für ein nicht weiter dargestelltes Getriebe mit zwei Getriebewellen 2 und 3, die durch eine vorgespannte Lageranordnung 20 gelagert ist. Die Lageranordnung 20 weist ein Wälzlager 20a in Form eines Schrägkugellagers 4 und ein Wälzlager 20b in Form eines zweireihigen Schrägkugellagers 5 auf. Das Schrägkugellager 5 ist zweireihig mit zumindest einer ersten Reihe 6 Kugeln 6a und wenigstens einer zweiten Reihe 7 Kugeln 6a und einem gemeinsamen Lagerring 8 zwischen den Reihen gebildet.

Die Getriebewelle 2 ist teilweise in die Getriebewelle 3 gesteckt, weist Zahnräder 2a, 2b, 11 und 12 auf und ist relativ zu dieser um die Rotationsachse 9 drehbar gelagert. Die Getriebewelle 3 ist mit Zahnrädern 3a und 3b versehen.

Das Wälzlager 20a ist in Figur 4 einreihig und kann alternativ auch als zweireihiges Schrägkugellager 5 ausgebildet sein. Das Schrägkugellager 5 weist einen inneren Lagerring 13, einen äußeren Lagerring 14 und den gemeinsamen Lagerring 8 auf: Letzterer ist auch als Zwischenring bezeichnet. Der innere Lagerring 13 ist mit einer inneren Laufbahn 15 versehen.

Der gemeinsame Lagerring 8 weist radial innen eine äußere Laufbahn 16 für die Reihe 6 und radial außen eine innere Laufbahn 17 für die Reihe 7 auf. An dem äußeren Lagerring 14 ist radial nach innen gewandt eine äußere Laufbahn 18 ausgebildet. Die Lagerringe 8, 13 und 14 sind konzentrisch zur Rotationsachse 9 und teilweise ineinander geschachtelt angeordnet.

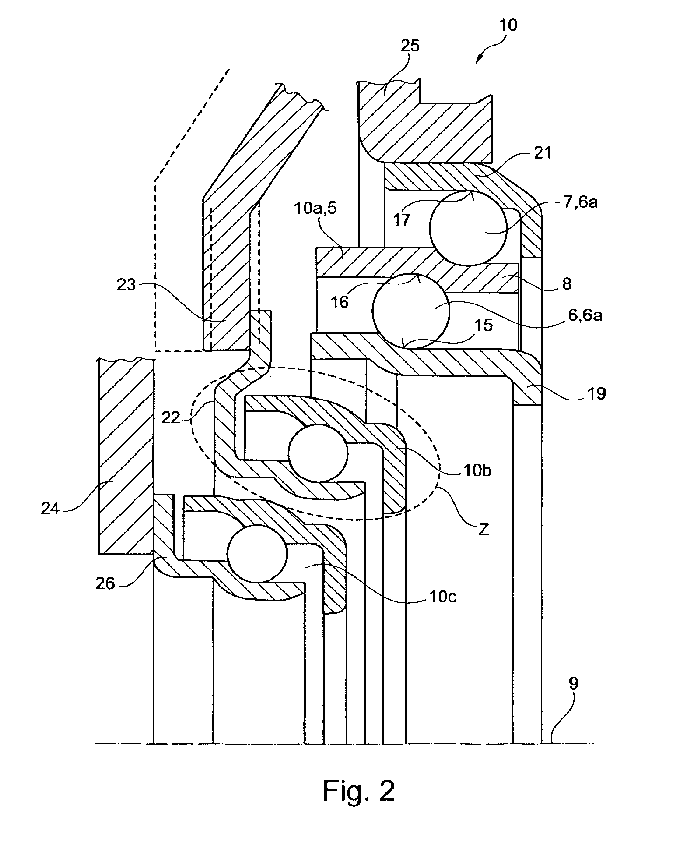

Figur 2 - Figur 2 zeigt einen Ausschnitt aus einer Kupplungsanordnung einer nicht weiter dargestellten Kupplung eines nicht weiter dargestellten Doppelkupplungsgetriebes. Die darin gezeigte Wälzlageranordnung 10 weist ein Wälzlager 10a in Form eines zweireihigen Schrägkugellagers 5 mit zumindest einer ersten Reihe 6 Kugeln 6a und wenigstens einer zweiten Reihe 7 Kugeln 6a und einem gemeinsamen Lagerring 8 zwischen den Reihen 6 und 7 auf, wobei der gemeinsame Lagerring 8 zwischen den Reihen angeordnet ist.

Die Wälzlageranordnung 10 sieht weitere Wälzlager 10b und 10c in Form von Schrägkugellagern vor, die als Kupplungsausrücklager einreihig ausgelegt sind aber auch zweireihig im Sinne der Erfindung ausgeführt sein können.

Die Wälzlager 10b und 10c sind mit Druckflanschen 22 bzw. 26 versehen. Jeder der Druckflansche 22 liegt an Federenden 23 bzw. von 24 jeweils einer Druckfeder der Kupplung an, von denen exemplarisch jeweils nur eines dargestellt ist. Das Wälzlager 10a ist ein Stützlager, das in einem um die Rotationsachse 9 drehenden Kupplungsdeckel 25 sitzt.

Das Wälzlager 10a weist einen inneren Lagerring 19 und einen äußeren Lagerring 21 sowie den als Zwischenring ausgebildeten gemeinsamen Lagerring 8 auf. An dem inneren Lagerring 19 ist die innere Laufbahn 15 und an dem gemeinsamen Ring die äußere Laufbahn 16 für die erste Reihe 6 ausgebildet. Außerdem ist der gemeinsame Lagerring 8 radial außen mit einer inneren Laufbahn 17 für die zweite Reihe 7 ausgebildet, die der äußeren Laufbahn 18 an dem äußeren Lagerring 21 radial gegenüberliegt. Die Lagerringe 8, 19 und 21 sind teilweise ineinander geschachtelt und konzentrisch zur Rotationsachse 9 angeordnet.

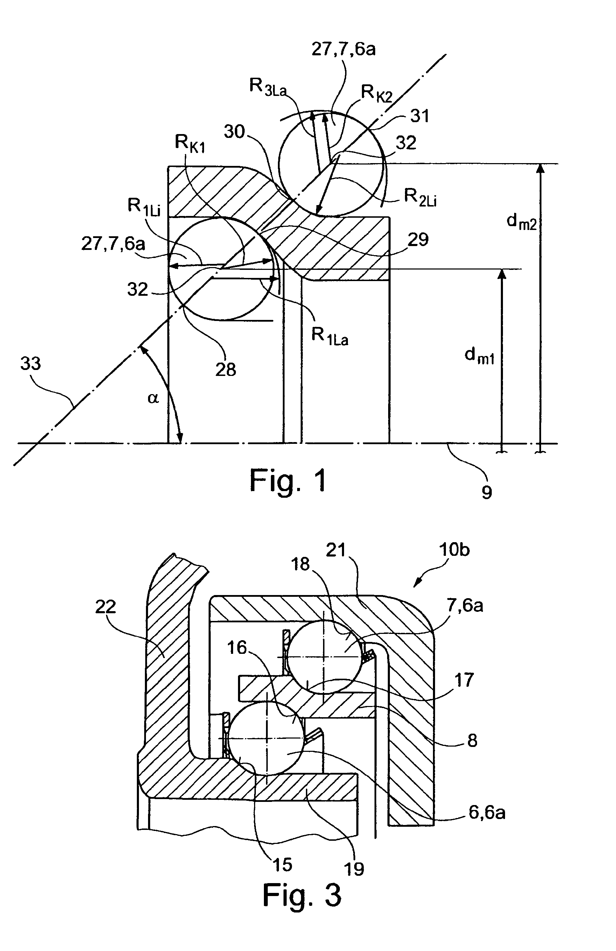

Figur 3 - Es ist auch denkbar, dass zumindest das Wälzlager 10b, so wie dies in Figur 3 alternativ anhand des Details Z nach Figur 2 abgebildet ist, zweireihig mit der Reihe 6 aus Kugeln 6a, dem gemeinsamen Lagerring 8 und der Reihe 7 aus Kugeln 6a ausgebildet ist. Das Wälzlager 10b weist in diesem Fall einen inneren Lagerring 19 und einen äußeren Lagerring 21 sowie den als Zwischenring ausgebildeten gemeinsamen Lagerring 8 auf. An dem inneren Lagerring 19 ist die innere Laufbahn 15 und an dem gemeinsamen Ring 8 die äußere Laufbahn 16 für die erste Reihe 6 ausgebildet. Außerdem ist der gemeinsame Lagerring 8 radial außen mit einer inneren Laufbahn 17 für die zweiter Reihe 7 ausgebildet, die der äußeren Laufbahn 18 an dem äußeren Lagerring 21 radial gegenüberliegt.

Figur 1 - Die Wälzlager 10a, 10b und 20b weisen eine erste Reihe 6 und eine zweite Reihe 7 mit jeweils Wälzkörpern 27 in Form der Kugeln 6a und einen gemeinsamen Lagerring 8 für beide Reihen 6 und 7 auf. Figur 1 zeigt ein Detail des jeweiligen Wälzlagers 10a, 10b und 20b in einer gedachten axial entlang der Rotationsachse 9 verlaufenden Schnittebene, die rein zufällig aus einer Anzahl weiterer möglicher Schnittebenen ausgesucht wurde. Die der möglichen Schnittebenen entspricht der Anzahl der Wälzköper 27 pro Reihe 6 oder 7.

Die Schnittebenen sind an den Kontakten 28, 29, 30 und 31 durch die Laufbahnen 15, 16, 17 und 18 durch den jeweiligen Mittelpunkt 32 der Wälzkörper 27 gelegt. Die Kontakte 28, 29, 30 und 31 sind, da die Wälzkörper 27 Kugeln 6a sind, im unbelasteten Zustand nahezu punktförmig. In der Darstellung nach Figur 1 liegen die Kontakte 28, 29, 30 und 31 und die Rotationszentren, d.h. die Mittelpunkte 32 der Wälzkörper 27 ideal auf einer gemeinsamen Drucklinie 33. Die Mittelpunkte 32 der Kugeln 6a der ersten Reihe 6 liegen auf einem gemeinsamen Teilkreis mit dem Teilkreisdurchmesser dₘ₁ und die Mittelpunkte 32 der Kugeln 6a der zweiten Reihe 7 auf dem Teilkreis mit dem Teilkreisdurchmesser dₘ₂.

Bei Betrieb des Wälzlagers 10a, 10b und 20b laufen die Wälzkörper 27 auf den jeweiligen Laufbahnen 15, 16, 17 und 18 mit unterschiedlichen Geschwindigkeiten ab, so dass die Position der Mittelpunkte 32 und damit der Kontakte 28 und 29 der Kugeln 6a der Reihe 6 zu den Mittelpunkten 32 und den Kontakten 30 und 31 der Reihe 7 zueinander eher zufällig ist und diese selten auf einer gemeinsamen Drucklinie liegen. Deshalb müssen durch eine beliebige ausgewählte Schnittebene, die durch den Mittelpunkt 32 wenigstens einer beliebigen der Kugeln 6a aus einer beliebigen der Reihen 6 oder 7 gelegt ist, nicht notwendigerweise andere Kugeln 6b im Mittelpunkt 32 geschnitten werden. Die Drucklinien 33 sind jedoch alle mit dem gleichen Schrägungswinkel α zur Rotationsachse 9 geneigt.

Der Lagerring 8 ist mit einer radial äußeren Laufbahn 16 für die als Kugeln 6a ausgebildeten Wälzkörper 27 der ersten Reihe 6 versehen. Außerdem weist der Lagerring eine innere Laufbahn 17 für die Kugeln 6a der zweiten Reihe 7 auf. Die Kugeln der beiden Reihen 6 und 7 weisen den gleichen Durchmesser auf, so dass die Radien der Kugeln R_{K1} und R_{K2} ebenfalls gleich sind. Die Wälzkörper 27 jeder der Reihe 6 stehen in berührenden Kontakt zur inneren Laufbahn 15 und zur äußeren Laufbahn 16. Die Wälzkörper der Reihe 7 stehen jeweils im berührenden Kontakt zu der inneren Laufbahn 17 und einer äußeren Laufbahn 18.

Die Kontur der inneren Laufbahn 15 ist in der jeweiligen Schnittebene am Kontakt 28 durch den Laufbahnradius R_{1Li} vorgegeben. Die äußere Laufbahn 16 am gemeinsamen Lagerring 8 weist den Laufbahnradius R_{1La} auf. Die innere Laufbahn 17 der zweiten Reihe 7 weist im Kontakt 30 den Radius R_{2Li} und die Laufbahn 18 im Kontakt 31 mit den Kugeln 6 den Laufbahnradius R_{2La} auf.

Da die Konturen der Kugeln durch den Radius R_{K1} beschrieben sind, sind die Konturen der Wälzkörper 27 und die Konturen der Laufbahnen 15, 16, 17 und 18 in den jeweiligen Schnittebenen von dem Rotationszentrum 32 aus betrachtet in die gleichen Richtungen konvex ausgewölbt.

Gemäß Erfindung ist der Kugelradius R_{K1}=R_{K2}<R_{1Li}<R_{1La}< R_{2Li}<R_{2La} und wenigstens ein Laufbahnradius R_{1Li} oder R_{1La}<R_{2Li}. Außerdem ist R_{1Li}<R_{2Li}. Weiterhin ist R_{1La}<R_{2Li}. Darüber hinaus ist R_{2Li}< R_{2La} und R_{1Li} < R_{2La}, so dass R_{K1}=R_{K2}< R_{1Li} < R_{1La} < R_{2Li} < R_{2La} ist.

**Bezugszeichen**

| | | | |
|---|---|---|---|
| 1 | Getriebewellenanordnung | 20b | Wälzlager |
| 2 | Getriebewelle | 20c | Wälzlager |
| 2a | Zahnrad | 21 | äußerer Lagerring |
| 2b | Zahnrad | 22 | Druckflansch |
| 3 | Getriebewelle | 23 | Federende |
| 3a | Zahnrad | 24 | Federende |
| 3b | Zahnrad | 25 | Kupplungsdeckel |
| 4 | Schrägkugellager | 26 | Druckflansch |
| 5 | zweireihiges Schrägkugellager | 27 | Wälzkörper |
| 6 | erste Reihe | 28 | Kontakt |
| 6a | Kugel | 29 | Kontakt |
| 7 | zweite Reihe | 30 | Kontakt |
| 8 | gemeinsamer Lagerring | 31 | Kontakt |
| 9 | Rotationsachse | 32 | Mittelpunkt |
| 10 | Wälzlageranordnung | 33 | Drucklinie |
| 10a | Wälzlager | | |
| 10b | Wälzlager | | |
| 10c | Wälzlager | | |
| 11 | Zahnrad | | |
| 12 | Zahnrad | | |
| 13 | innerer Lagerring | | |
| 14 | äußerer Lagerring | | |
| 15 | innere Laufbahn | | |
| 16 | äußere Laufbahn | | |
| 17 | innere Laufbahn | | |
| 18 | äußere Laufbahn | | |
| 19 | innerer Lagerring | | |
| 20 | Lageranordnung | | |
| 20a | Wälzlager | | |

## Patentansprüche

1. Wälzlager (10a, 10b, 20b) das wenigstens eine erste Reihe (6) Wälzkörper (27) und eine zweite Reihe (7) Wälzkörper (27) und einen gemeinsamen Lagerring (8) für beide Reihen (6, 7) aufweist, wobei
- der Lagerring (8) eine äußere Laufbahn (16) für die Wälzkörper (27) der ersten Reihe (6) und eine innere Laufbahn (17) für die Wälzkörper (27) der zweiten Reihe (7) aufweist,
- die Wälzkörper (27) in jeder der Reihen (6, 7) jeweils im berührenden Kontakt zu einer inneren Laufbahn (15, 17) und einer äußeren Laufbahn (16, 18) stehen,
- die Konturen der Laufbahnen (15, 16, 17, 18) in gedachten axial entlang der Rotationsachse (9) verlaufenden Schnittebenen jeweils durch mindestens einen in der jeweiligen Schnittebene ausgerichteten Laufbahnradius vorgegeben sind, wobei die Schnittebenen am Kontakt durch die Laufbahn und durch den jeweiligen Wälzkörper (27) gelegt sind,
- die Konturen der Wälzkörper (27) zumindest in den Schnittebenen jeweils zu einem Rotationszentrum (32) der Wälzkörper (27) ballig durch mindestens einen Wälzkörperradius beschrieben sind,
- die Konturen der Wälzkörper (27) und der Laufbahnen (15, 16, 17, 18) in den jeweiligen Schnittebenen von dem Rotationszentrum (32) aus betrachtet in die gleichen Richtungen konvex ausgewölbt sind,
und wobei die Wälzkörper (27) der ersten Reihe (6) den gleichen Wälzkörperradius aufweisen, wie die Wälzkörper (27) der zweiten Reihe (7), **dadurch gekennzeichnet, dass** der Laufbahnradius einer der Laufbahnen (15, 16) für die erste Reihe (6) anders ist als der Laufbahnradius der inneren Laufbahn (17) an dem Lagerring (8).

2. Wälzlager nach Anspruch 1, **dadurch gekennzeichnet, dass** der Laufbahnradius der inneren Laufbahn (15) der ersten Reihe (6) kleiner ist als der Laufbahnradius der inneren Laufbahn (17) an dem Lagerring.

3. Wälzlager nach Anspruch 1, **dadurch gekennzeichnet, dass** der Laufbahnradius der äußeren Laufbahn (16) der ersten Reihe (6) an dem Lagerring (8) kleiner ist als der Laufbahnradius der inneren Laufbahn (17) an dem Lagerring (8).

4. Wälzlager nach Anspruch 1, **dadurch gekennzeichnet, dass** der Laufbahnradius inneren Laufbahn (17) an dem Lagerring (8) kleiner ist als der Laufbahnradius der äußeren Laufbahn (18) der zweiten Reihe (7).

5. Wälzlager nach Anspruch 1, **dadurch gekennzeichnet, dass** der Laufbahnradius der inneren Laufbahn (15) der ersten Reihe (6) kleiner ist als der Laufbahnradius der äußeren Laufbahn (16) der ersten Reihe (6) an dem Lagerring (8).

6. Wälzlager nach Anspruch 5, **dadurch gekennzeichnet, dass** der Laufbahnradius der äußeren Laufbahn (16) der ersten Reihe (6) an dem Lagerring (8) kleiner ist als der Laufbahnradius der inneren Laufbahn (17) der zweiten Reihe (7) an dem Lagerring (8) und dass der Laufbahnradius der inneren Laufbahn (17) an dem Lagerring (8) kleiner ist als der Laufbahnradius der äußeren Laufbahn (18) der zweiten Reihe (7).

7. Wälzlager nach Anspruch 1, **dadurch gekennzeichnet, dass** der Einstichpunkt des Wälzkörperradius das Rotationszentrum (32) ist.

8. Wälzlageranordnung nach Anspruch 7, **dadurch gekennzeichnet, dass** die Wälzkörper (27) Kugeln (6a) sind.

9. Wälzlager nach Anspruch 8, **dadurch gekennzeichnet, dass** die Reihen (6, 7) jeweils in Schrägkugellageranordnung angeordnet sind.

10. Wälzlager nach Anspruch 9, **dadurch gekennzeichnet, dass** die mit dem Schrägungswinkel α über der Rotationsachse geneigten Drucklinien (33) der beiden Reihen (6, 7) mit gleich großen Schrägungswinkeln α zur Rotationsachse (9) geneigt sind.

11. Getriebewellenanordnung (1) für ein Getriebe mit wenigstens einer Getriebewelle, die durch eine vorgespannte Wälzlageranordnung gelagert ist, **dadurch gekennzeichnet, dass** zumindest ein Wälzlager (20) der Wälzlageranordnung (20) durch mindestens ein zweireihiges Schrägkugellager (5) mit zumindest einer ersten Reihe (6) Kugeln (6a) und wenigstens einer zweiten Reihe (7) Kugeln (6a) und einem gemeinsamen Lagerring (8) zwischen den Reihen (6, 7) gebildet ist, wobei der gemeinsame Lagerring (8) eine an die äußere Laufbahn (16) für die Kugeln (6a) der ersten Reihe (6) und eine innere Laufbahn (17) für die Kugeln (6a) der zweiten Reihe (7) aufweist, und wobei die Schmiegungen zwischen den Kugeln (6a) der ersten Reihe (6) und zumindest der Krümmung einer der Laufbahnen (15, 16) der ersten Reihe (6) kleiner sind als die Schmiegungen der Kugeln (6a) der zweiten Reihe (7) mit den Krümmungen zumindest einer der Laufbahnen (17, 18) für die zweiten Reihe (7).

12. Wälzlageranordnung in wenigstens einer Kupplung eines Doppelkupplungsgetriebes die wenigstens ein Schrägkugellager aufweist, **dadurch gekennzeichnet, dass** das Schrägkugellager (5) zweireihig mit zumindest einer ersten Reihe (6) Kugeln (6a) und wenigstens einer zweiten Reihe (7) Kugeln (6a) und einem gemeinsamen Lagerring (8) zwischen den Reihen (6, 7) gebildet ist, wobei der gemeinsame Lagerring (8) eine an die äußere Laufbahn (16) für die Kugeln (6a) der ersten Reihe (6) und eine innere Laufbahn (17) für die Kugeln (6a) der zweiten Reihe (7) aufweist, und wobei die Schmiegung zwischen den Kugeln (6a) der ersten Reihe (6) und zumindest der Krümmung einer der Laufbahnen (15, 16) der ersten Reihe (6) kleiner sind als die Schmiegungen der Kugeln (6a) der zweiten Reihe (7) mit den Krümmungen zumindest einer der Laufbahnen (17, 18) für die zweiten Reihe (7).

13. Wälzlageranordnung nach Anspruch 12, **dadurch gekennzeichnet, dass** das Schrägkugellager (5) einen inneren Lagering (19) für die erste Reihe (6), den gemeinsamen Lagerring (8) zwischen einer ersten Reihe (6) und einer zweiten Reihe (7) und einen äußeren Lagerring (21) für die zweite Reihe (7) aufweist, wobei die Lagerringe (8, 19, 21) radial konzentrisch zueinander und axial zumindest teilweise so ineinander geschachtelt sind, dass der gemeinsame Lagerring (8) zumindest eine axialen Abschnitt des inneren Lagerrings (19) und der äußere Lagerring (21) zumindest einen axialen Abschnitt des gemeinsamen Lagerrings (8) umfangsseitig umgreift.

14. Wälzlageranordnung nach Anspruch 13, **dadurch gekennzeichnet, dass** die Schmiegung zwischen der Wälzkörpern (27) der ersten Reihe (6) und der Krümmung der inneren Laufbahn (15) an dem inneren Lagerring (19) geringer ist als die Schmiegung zwischen den Wälzkörpern (27) der ersten Reihe (6) und der Krümmung der äußeren Laufbahn (16) an dem gemeinsamen Lagerring und dass die Schmiegung zwischen den Wälzkörpern (27) der ersten Reihe (6) und der Krümmung der äußeren Laufbahn (16) an dem gemeinsamen Lagerring (8) geringer ist als die Schmiegung zwischen den Wälzkörpern (27) der zweiten Reihe (7) und der inneren Laufbahn (17) an dem gemeinsamen Lagerring (8), wobei die Schmiegung zwischen den Wälzkörpern (27) der zweiten Reihe (7) und der Krümmung der äußeren Laufbahn (18) an dem Außenring (21) die größte im Schrägkugellager (5) ist.

## Claims

1. Anti-friction bearing (10a, 10b, 20b) which has at least one first row (6) of rolling bodies (27) and one second row (7) of rolling bodies (27) and a common bearing ring (8) for both rows (6, 7),
- the bearing ring (8) having an outer raceway (16) for the rolling bodies (27) of the first row (6) and an inner raceway (17) for the rolling bodies (27) of the second row (7),
- the rolling bodies (27) in each of the rows (6, 7) are in each case in touching contact with an inner raceway (15, 17) and an outer raceway (16, 18),
- the contours of the raceways (15, 16, 17, 18) are predetermined in imaginary sectional planes which run axially along the rotational axis (9) in each case by at least one raceway radius which is oriented in the respective sectional plane, the sectional planes being defined at the contact by the raceway and by the respective rolling body (27),
- the contours of the rolling bodies (27) being described at least in the sectional planes by at least one rolling body radius in a convex manner in each case with respect to a rotational centre (32) of the rolling bodies (27),
- the contours of the rolling bodies (27) and of the raceways (15, 16, 17, 18) in the respective sectional planes being curved convexly in the same directions as viewed from the rotational centre (32),
and the rolling bodies (27) of the first row (6) having the same rolling body radius as the rolling bodies (27) of the second row (7), **characterized in that** the raceway radius of one of the raceways (15, 16) for the first row (6) is different to the raceway radius of the inner raceway (17) on the bearing ring (8).

2. Anti-friction bearing according to Claim 1, **characterized in that** the raceway radius of the inner raceway (15) of the first row (6) is smaller than the raceway radius of the inner raceway (17) on the bearing ring.

3. Anti-friction bearing according to Claim 1, **characterized in that** the raceway radius of the outer raceway (16) of the first row (6) on the bearing ring (8) is smaller than the raceway radius of the inner raceway (17) on the bearing ring (8).

4. Anti-friction bearing according to Claim 1, **characterized in that** the raceway radius of the inner raceway (17) on the bearing ring (8) is smaller than the raceway radius of the outer raceway (18) of the second row (7).

5. Anti-friction bearing according to Claim 1, **characterized in that** the raceway radius of the inner raceway (15) of the first row (6) is smaller than the raceway radius of the outer raceway (16) of the first row (6) on the bearing ring (8).

6. Anti-friction bearing according to Claim 5, **characterized in that** the raceway radius of the outer raceway (16) of the first row (6) on the bearing ring (8) is smaller than the raceway radius of the inner raceway (17) of the second row (7) on the bearing ring (8), and **in that** the raceway radius of the inner raceway (17) on the bearing ring (8) is smaller than the raceway radius of the outer raceway (18) of the second row (7).

7. Anti-friction bearing according to Claim 1, **characterized in that** the groove point of the rolling body radius is the rotational centre (32).

8. Anti-friction bearing arrangement according to Claim 7, **characterized in that** the rolling bodies (27) are balls (6a).

9. Anti-friction bearing according to Claim 8, **characterized in that** the rows (6, 7) are arranged in each case in an angular-contact ball bearing arrangement.

10. Anti-friction bearing according to Claim 9, **characterized in that** the pressure lines (33) of the two rows (6, 7) which are inclined at the helix angle α against the rotational axis are inclined at helix angles α of identical magnitude with respect to the rotational axis (9).

11. Transmission shaft arrangement (1) for a transmission having at least one transmission shaft which is mounted by way of a prestressed anti-friction bearing arrangement, **characterized in that** at least one anti-friction bearing (20) of the anti-friction bearing arrangement (20) is formed by at least one two-row angular-contact ball bearing (5) with at least one first row (6) of balls (6a) and at least one second row (7) of balls (6a) and a common bearing ring (8) between the rows (6, 7), the common bearing ring (8) having an outer raceway (16) for the balls (6a) of the first row (6) and an inner raceway (17) for the balls (6a) of the second row (7), and the osculations between the balls (6a) of the first row (6) and at least the curvature of one of the raceways (15, 16) of the first row (6) being smaller than the osculations of the balls (6a) of the second row (7) with the curvatures of at least one of the raceways (17, 18) for the second row (7).

12. Anti-friction bearing arrangement in at least one clutch of a double clutch transmission, which anti-friction bearing arrangement has at least one angular-contact ball bearing, **characterized in that** the angular-contact ball bearing (5) is formed in two rows with at least one first row (6) of balls (6a) and at least one second row (7) of balls (6a) and a common bearing ring (8) between the rows (6, 7), the common bearing ring (8) having an outer raceway (16) for the balls (6a) of the first row (6) and an inner raceway (17) for the balls (6a) of the second row (7), and the osculations between the balls (6a) of the first row (6) and at least the curvature of one of the raceways (15, 16) of the first row (6) being smaller than the osculations of the balls (6a) of the second row (7) with the curvatures of at least one of the raceways (17, 18) for the second row (7).

13. Anti-friction bearing arrangement according to Claim 12, **characterized in that** the angular-contact ball bearing (5) has an inner bearing ring (19) for the first row (6), the common bearing ring (8) between a first row (6) and a second row (7), and an outer bearing ring (21) for the second row (7), the bearing rings (8, 19, 21) being nested radially concentrically with respect to one another and axially at least partially inside one another in such a way that the common bearing ring (8) engages around at least one axial section of the inner bearing ring (19) and the outer bearing ring (21) engages around at least one axial section of the common bearing ring (8) on the circumferential side.

14. Anti-friction bearing arrangement according to Claim 13, **characterized in that** the osculation between the rolling bodies (27) of the first row (6) and the curvature of the inner raceway (15) on the inner bearing ring (19) is smaller than the osculation between the rolling bodies (27) of the first row (6) and the curvature of the outer raceway (16) on the common bearing ring, and **in that** the osculation between the rolling bodies (27) of the first row (6) and the curvature of the outer raceway (16) on the common bearing ring (8) is smaller than the osculation between the rolling bodies (27) of the second row (7) and the inner raceway (17) on the common bearing ring (8), the osculation between the rolling bodies (27) of the second row (7) and the curvature of the outer raceway (18) on the outer ring (21) being the greatest in the angular-contact ball bearing (5).

## Revendications

1. Palier à roulement (10a, 10b, 20b) qui comprend au moins une première rangée (6) de corps de roulement (27) et une deuxième rangée (7) de corps de roulement (27) et une bague de palier commune (8) pour les deux rangées (6, 7),
- la bague de palier (8) comprenant un chemin de roulement extérieur (16) pour les corps de roulement (27) de la première rangée (6) et un chemin de roulement intérieur (17) pour les corps de roulement (27) de la deuxième rangée (7),
- les corps de roulement (27) dans chacune des rangées (6, 7) étant à chaque fois en contact contigu avec un chemin de roulement intérieur (15, 17) et un chemin de roulement extérieur (16, 18),
- les contours des chemins de roulement (15, 16, 17, 18) dans des plans de coupe imaginaires s'étendant axialement le long de l'axe de rotation (9) étant prédéfinis à chaque fois par au moins un rayon de chemin de roulement orienté dans le plan de coupe respectif, les plans de coupe étant définis au niveau du contact par le chemin de roulement et par le corps de roulement (27) respectif,
- les contours des corps de roulement (27) étant décrits au moins dans les plans de coupe par au moins un rayon de corps de roulement d'une manière à chaque fois bombée par rapport à un centre de rotation (32) des corps de roulement (27),
- les contours des corps de roulement (27) et des chemins de roulement (15, 16, 17, 18) dans les plans de coupe respectifs étant courbés de manière convexe dans les mêmes directions tel que considéré à partir du centre de rotation (32),
et les corps de roulement (27) de la première rangée (6) présentant le même rayon de corps de roulement que les corps de roulement (27) de la deuxième rangée (7), **caractérisé en ce que** le rayon de chemin de roulement de l'un des chemins de roulement (15, 16) pour la première rangée (6) est différent du rayon de chemin de roulement du chemin de roulement intérieur (17) sur la bague de palier (8).

2. Palier à roulement selon la revendication 1, **caractérisé en ce que** le rayon de chemin de roulement du chemin de roulement intérieur (15) de la première rangée (6) est inférieur au rayon de chemin de roulement du chemin de roulement intérieur (17) sur la bague de palier.

3. Palier à roulement selon la revendication 1, **caractérisé en ce que** le rayon de chemin de roulement du chemin de roulement extérieur (16) de la première rangée (6) sur la bague de palier (8) est inférieur au rayon de chemin de roulement du chemin de roulement intérieur (17) sur la bague de palier (8).

4. Palier à roulement selon la revendication 1, **caractérisé en ce que** le rayon de chemin de roulement du chemin de roulement intérieur (17) sur la bague de palier (8) est inférieur au rayon de chemin de roulement du chemin de roulement extérieur (18) de la deuxième rangée (7).

5. Palier à roulement selon la revendication 1, **caractérisé en ce que** le rayon de chemin de roulement du chemin de roulement intérieur (15) de la première rangée (6) est inférieur au rayon de chemin de roulement du chemin de roulement extérieur (16) de la première rangée (6) sur la bague de palier (8).

6. Palier à roulement selon la revendication 5, **caractérisé en ce que** le rayon de chemin de roulement du chemin de roulement extérieur (16) de la première rangée (6) sur la bague de palier (8) est inférieur au rayon de chemin de roulement du chemin de roulement intérieur (17) de la deuxième rangée (7) sur la bague de palier (8), et **en ce que** le rayon de chemin de roulement du chemin de roulement intérieur (17) sur la bague de palier (8) est inférieur au rayon de chemin de roulement du chemin de roulement extérieur (18) de la deuxième rangée (7).

7. Palier à roulement selon la revendication 1, **caractérisé en ce que** le centre du rayon de corps de roulement est le centre de rotation (32).

8. Ensemble de paliers à roulement selon la revendication 7, **caractérisé en ce que** les corps de roulement (27) sont des billes (6a).

9. Palier à roulement selon la revendication 8, **caractérisé en ce que** les rangées (6, 7) sont à chaque fois disposées suivant un agencement de palier à billes à contact oblique.

10. Palier à roulement selon la revendication 9, **caractérisé en ce que** les lignes de pression (33), inclinées de l'angle d'inclinaison α par rapport à l'axe de rotation, des deux rangées (6, 7) sont inclinées suivant des angles d'inclinaison α de même amplitude par rapport à l'axe de rotation (9).

11. Ensemble d'arbre de transmission (1) pour une transmission comprenant au moins un arbre de transmission qui est monté au moyen d'un ensemble de paliers à roulement précontraint, **caractérisé en ce qu'**au moins un palier à roulement (20) de l'ensemble de paliers à roulement (20) est formé par au moins un palier à billes à contact oblique (5) à deux rangées comprenant au moins une première rangée (6) de billes (6a) et au moins une deuxième rangée (7) de billes (6a) et une bague de palier commune (8) entre les rangées (6, 7), la bague de palier commune (8) comprenant un chemin de roulement extérieur (16) pour les billes (6a) de la première rangée (6) et un chemin de roulement intérieur (17) pour les billes (6a) de la deuxième rangée (7), et les osculations entre les billes (6a) de la première rangée (6) et au moins la courbure de l'un des chemins de roulement (15, 16) de la première rangée (6) étant inférieures aux osculations des billes (6a) de la deuxième rangée (7) avec les courbures d'au moins l'un des chemins de roulement (17, 18) pour la deuxième rangée (7).

12. Ensemble de paliers à roulement dans au moins un embrayage d'une transmission à embrayage double qui comprend au moins un palier à billes à contact oblique, **caractérisé en ce que** le palier à billes à contact oblique (5) est formé en deux rangées avec au moins une première rangée (6) de billes (6a) et au moins une deuxième rangée (7) de billes (6a) et une bague de palier commune (8) entre les rangées (6, 7), la bague de palier commune (8) comprenant un chemin de roulement extérieur (16) pour les billes (6a) de la première rangée (6) et un chemin de roulement intérieur (17) pour les billes (6a) de la deuxième rangée (7), et les osculations entre les billes (6a) de la première rangée (6) et au moins la courbure de l'un des chemins de roulement (15, 16) de la première rangée (6) étant inférieures aux osculations des billes (6a) de la deuxième rangée (7) avec les courbures d'au moins l'un des chemins de roulement (17, 18) pour la deuxième rangée (7).

13. Ensemble de paliers à roulement selon la revendication 12, **caractérisé en ce que** le palier à billes à contact oblique (5) comprend une bague de palier intérieure (19) pour la première rangée (6), la bague de palier commune (8) entre une première rangée (6) et une deuxième rangée (7) et une bague de palier extérieure (21) pour la deuxième rangée (7), les bagues de palier (8, 19, 21) étant imbriquées de manière radialement concentrique les unes par rapport aux autres et axialement au moins partiellement les unes dans les autres de telle sorte que la bague de palier commune (8) vienne en prise autour d'au moins une portion axiale de la bague de palier intérieure (19) et que la bague de palier extérieure (21) vienne en prise autour d'au moins une portion axiale de la bague de palier commune (8) du côté périphérique.

14. Ensemble de paliers à roulement selon la revendication 13, **caractérisé en ce que** l'osculation entre les corps de roulement (27) de la première rangée (6) et la courbure du chemin de roulement intérieur (15) sur la bague de palier intérieure (19) est inférieure à l'osculation entre les corps de roulement (27) de la première rangée (6) et la courbure du chemin de roulement extérieur (16) sur la bague de palier commune, et **en ce que** l'osculation entre les corps de roulement (27) de la première rangée (6) et la courbure du chemin de roulement extérieur (16) sur la bague de palier commune (8) est inférieure à l'osculation entre les corps de roulement (27) de la deuxième rangée (7) et le chemin de roulement intérieur (17) sur la bague de palier commune (8), l'osculation entre les corps de roulement (27) de la deuxième rangée (7) et la courbure du chemin de roulement extérieur (18) sur la bague extérieure (21) étant la plus grande dans le palier à billes à contact oblique (5).
